# EUROPÄISCHE PATENTANMELDUNG

(11) **EP 0 987 443 A1**
(43) Veröffentlichungstag der Anmeldung: **22.03.2000**
(21) Anmeldenummer: 99117233.9
(22) Anmeldetag: 02.09.1999
(51) Int. Cl.: F15B 11/048, B60J 7/12

(54) **Betätigungseinrichtung für ein Verdeck eines Cabriolets**

(30) Priorität: 16.09.1998 DE 19842337
(71) Anmelder: Mannesmann VDO Aktiengesellschaft, 60388 Frankfurt am Main (DE)
(72) Erfinder: Baumert, Jochen, 60489 Frankfurt (DE); Schröder, Hans-Joachim, 65189 Wiesbaden (DE)
(74) Vertreter: Rassler, Andrea, Dipl.-Phys.

(57) **Zusammenfassung**

Eine Betätigungseinrichtung für ein Verdeck (1) eines Cabriolets hat einen Elektromotor (10) mit regelbarer Drehzahl zum Antrieb eines Hydraulikgetriebes (11). Eine Steuereinheit (7) zur Ansteuerung des Elektromotors (10) weist einen Speicher (18) für entsprechend der Positionen des Verdecks (1) vorgesehene Drehzahlen auf. Hierdurch sind die Drehzahlen als einfach zu ändernde Software abgespeichert.

## Beschreibung

Die Erfindung betrifft eine Betätigungseinrichtung für ein Verdeck eines Cabriolets mit einem eine Hydraulikpumpe und an dem Verdeck angelenkte Hydraulikmotoren aufweisenden Hydraulikgetriebe, mit einem Positionsgeber zur Erzeugung von elektrischen Signalen in Abhängigkeit von der Position des Verdecks und mit einer Steuerelektronik zur Erzeugung des vorgesehenen Bewegungsablaufs des Verdecks und zur Erfassung der elektrischen Signale des Positionsgebers.

Solche Betätigungseinrichtungen werden in heutigen Cabriolets häufig eingesetzt und sind damit bekannt. Die Steuerung der meist als Hydraulikzylinder ausgebildeten Hydraulikmotoren erfolgt hierbei über elektromagnetisch schaltbare Hydraulikventile. Die Endschalter sind an den Enden des Bewegungsbereichs des Verdecks angeordnet und leiten beim Erreichen des Verdecks in seiner Endstellung ein Signal zu der Steuerelektronik. Um die Hydraulikventile bei vorgesehenen Positionen des Verdecks zu schalten, sind häufig weitere Endschalter innerhalb des Bewegungsbereichs des Verdecks angeordnet. Die Geschwindigkeit des Verdecks beim Öffnen und Schließen ist durch die Abmessungen von Gestängen des Verdecks und von der Volumenstrom-Druck-Kennlinie der Hydraulikpumpe vorgegeben. Hierbei führen bereits geringe Änderungen an dem konstruktiven Aufbau des Verdecks zu deutlichen Veränderungen der Geschwindigkeit der Bewegung des Verdecks.

Nachteilig bei der bekannten Betätigungseinrichtung ist, daß sich die Anpassung des Gestänges auf die vorgesehene Geschwindigkeit der Bewegung des Verdecks sehr aufwendig gestaltet. Weiterhin verläuft die Bewegung des Verdecks sehr hakelig und langsam.

Der Erfindung liegt das Problem zugrunde, eine Betätigungseinrichtung der eingangs genannten Art so zu gestalten, daß die Bewegung des Verdecks mit besonders geringem baulichen Aufwand auf eine vorgesehene Geschwindigkeit angepaßt werden kann.

Dieses Problem wird erfindungsgemäß dadurch gelöst, daß ein Volumenstrom an Hydraulikmittel der Hydraulikpumpe oder eine hydraulische Leistung des Hydraulikmittels von der Steuerelektronik zur Erzeugung einer vorgesehenen Bewegungsgeschwindigkeit des Verdecks regelbar ist.

Durch diese Gestaltung läßt sich die Geschwindigkeit während des Verfahrens des Verdecks durch die Regelung des Volumenstroms der Hydraulikpumpe einfach kontinuierlich anpassen. Dank der Erfindung läßt sich der Bewegungsbereich des Verdecks durch den Einsatz von mehreren Endschaltern in mehrere Positionsbereiche unterteilen und für jeden Positionbereich durch die Regelung eines entsprechenden Volumenstroms eine vorgesehene Geschwindigkeit einstellen. Die Geschwindigkeit läßt sich daher unabhängig von den Abmessungen des Gestänges verändern. Mit der erfindungsgemäßen Betätigungseinrichtung können zudem verschiedene Verdecktypen angesteuert werden. Dies führt zu einer sehr kurzen Entwicklungszeit für ein neues Verdeck.

Der Volumenstrom des Hydraulikmittels könnte beispielsweise über ein stufenloses Getriebe zwischen der Hydraulikpumpe und einem diese antreibenden Elektromotor geregelt werden. Denkbar wäre auch, eine Hydraulikpumpe mit einem veränderlichen Verdrängervolumen einzusetzen. Die erfindungsgemäße Betätigungseinrichtung erfordert jedoch einen besonders geringen konstruktiven Aufwand und gestaltet sich besonders kostengünstig, wenn die Drehzahl eines die Hydraulikpumpe antreibenden Elektromotors regelbar ist.

Die Anpassung der erfindungsgemäßen Betätigungseinrichtung auf verschiedene Verdecktypen gestaltet sich besonders kostengünstig, wenn die Steuerelektronik einen Speicher für mehrere, bei verschiedenen Positionen des Verdecks vorgesehene Drehzahlen oder Drehzahlverläufe des Elektromotors hat. Hierdurch sind die Drehzahlen und Drehzahlverläufe des Elektromotors als Software gespeichert und lassen sich daher einfach ändern.

Vorteilhafterweise erfassen mehrere Endlagenschalter die Position des Verdeckes, wobei jedem Bereich zwischen zwei Endlagenschaltungen eine konstante Drehzahl oder eine konstante Leistung des Elektromotors zugeordnet ist.

Die Endschalter dienen als Stützpunkte für die Positionserkennung. Zwischen diesen Stützpunkten wird in einer anderen Ausführung die Drehzahl des Motors über der Zeit integriert. Damit kann die Position zwischen den Stützpunkten interpoliert werden. Auch hier erfolgt in Abhängigkeit der Position eine Drehzahl- oder PWM-Vorgabe für den Elektromotor.

Man könnte daran denken, die gesamte Bewegung des Verdecks mit vielen Endschaltern in zahlreiche Positionsbereiche zu unterteilen und in den Positionsbereichen jeweils die Drehzahl des Elektromotors zu verändern. Dies erfordert jedoch eine hohe Anzahl an Endschaltern. Eine hohe Anzahl an Endschaltern läßt sich gemäß einer anderen vorteilhaften Weiterbildung der Erfindung jedoch vermeiden, wenn die Steuerelektronik Mittel zur Berechnung der aktuellen Position des Verdecks hat. Hierdurch kann durch die Anzahl der Umdrehungen des Elektromotors und dem durchschnittlichen Verdrängervolumen der Hydraulikpumpe die ungefähre Position des Verdecks von der Steuereinrichtung berechnet werden. Deshalb ist nur eine besonders kleine Anzahl an Endschaltern für Stützstellen zur Berechnung der Position des Verdecks erforderlich. Ein weiterer Vorteil dieser Gestaltung besteht darin, daß es hierdurch nicht mehr erforderlich ist, bei einem Signal eines der Endschalter eine andere Geschwindigkeit des Verdecks zu fahren, sondern die Geschwindigkeit kann kontinuierlich verändert werden. Durch diese Gestaltung wird eine hakelige Bewegung des Verdecks vermieden.

Die Mittel zur Berechnung der aktuellen Position des Verdecks erfordern gemäß einer anderen vorteilhaften Weiterbildung der Erfindung einen besonders geringen baulichen Aufwand, wenn die Steuerelektronik zur Ermittlung der aktuellen Position des Verdecks aus der Anzahl der Umdrehungen des Elektromotors und dem volumetrischen Wirkungsgrad des Hydraulikgetriebes ausgebildet ist.

Zur weiteren Erhöhung der Genauigkeit bei der Ermittlung der Position des Verdecks trägt es bei, wenn der Elektromotor die Winkelposition oder Geschwindigkeit des Rotors des Verdecks erfaßt und wenn die Steuerelektronik zur Berechnung der Position des Verdecks über die Rotorposition bzw. Rotorgeschwindigkeit ausgebildet ist.

Die aktuelle Position des Verdecks läßt sich gemäß einer anderen vorteilhaften Weiterbildung der Erfindung besonders genau durch einen Sensor zur Erfassung eines Stellwinkels oder Stellweges eines Gestänges des Verdecks ermitteln. Der Sensor kann hierbei beispielsweise wie ein Potentiometer ein analoges Signal erzeugen oder Markierungen auf dem Gestänge abtasten und zählen. Diese Gestaltung ermöglicht nahezu beliebige Geschwindigkeitsänderungen beim Verfahren des Verdecks bei einer besonders geringen Anzahl von Endschaltern. In Abhängigkeit der Position erfolgt eine Drehzahl- oder PWM-Vorgabe für den Elektromotor.

Die erfindungsgemäße Betätigungseinrichtung gestaltet sich bei bürstenbehafteten DC-Motoren besonders kostengünstig, wenn die Steuerelektronik zur Erfassung und zum Zählen von Spannungs- und Stromspitzen ausgebildet ist. Diese entstehen z. B. durch einen Hallgeber oder durch Kommutierung des Motors (ripple counting).

Bei der Berechnung der Position des Verdecks über die Umdrehungen des Elektromotors führt die Veränderung des hydraulischen Wirkungsgrades des Hydraulikgetriebes zu Fehlern. Diese Fehler lassen sich gemäß einer anderen vorteilhaften Weiterbildung der Erfindung mittels Sensoren für Druck und Temperatur des Hydraulikmittels besonders gering halten.

Der Fehler bei der Erfassung der Position des Verdecks läßt sich gemäß einer anderen vorteilhaften Weiterbildung der Erfindung mit besonders geringem Aufwand weiter verringern, wenn die Steuerelektronik einen Speicher für eine durchschnittliche Anzahl von Umdrehungen des Elektromotors für eine Bewegung des Verdecks zwischen zwei Endschaltern hat. Hierdurch werden Einflüsse durch einen Verschleiß des Hydraulikgetriebes über die Zeit ausgeglichen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Seitenansicht eines Kraftfahrzeuges mit einem teilweise geöffneten Verdeck,
- Fig.2: ein Schaltbild einer erfindungsgemäßen Betätigungseinrichtung für das Verdeck aus Figur 1.

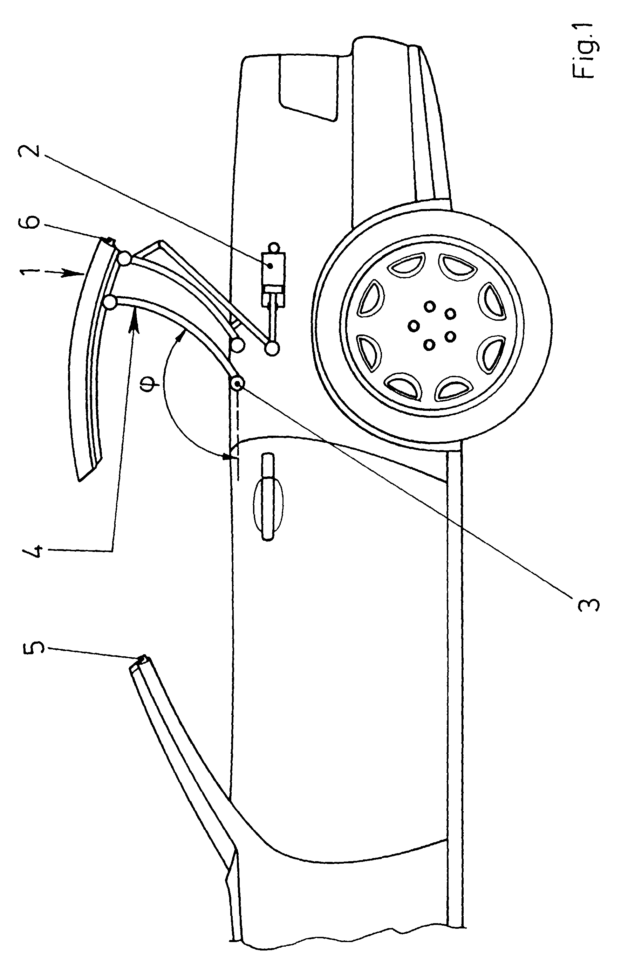

Die Figur 1 zeigt einen hinteren Bereich eines Kraftfahrzeuges mit einem teilweise geöffneten Verdeck 1. Das Verdeck 1 hat ein mittels eines Hydraulikmotors 2 um einen Lagerpunkt 3 verschwenkbares Gestänge 4. Der Hydraulikmotor 2 ist hierbei als Hydraulikzylinder ausgebildet. An dem Verdeck 1 und an feststehenden Bauteilen des Kraftfahrzeuges sind Endschalter 5, 6 angeordnet.

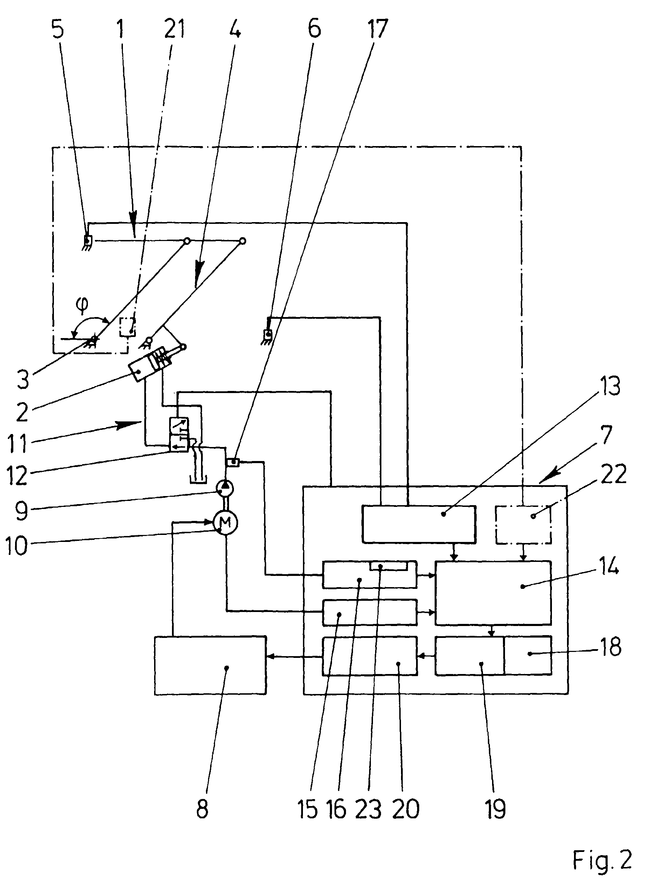

Die Figur 2 zeigt ein Schaltbild einer erfindungsgemäßen Betätigungseinrichtung für das Verdeck 1 aus Figur 1. Die Betätigungseinrichtung hat eine Steuerelektronik 7 mit einer Endstufe 8 zur Ansteuerung eines eine Hydraulikpumpe 9 antreibenden Elektromotors 10. Der Hydraulikmotor 2 bildet mit einer Hydraulikpumpe 9 ein Hydraulikgetriebe 11, welches von einem Hydraulikventil 12 geschaltet werden kann. Das Hydraulikventil 12 wird entsprechend einer vorgesehenen Bewegungsrichtung des Verdecks von der Steuerelektronik 7 geschaltet.

Die Endschalter 5, 6 leiten, wenn das Verdeck 1 eine vorgesehene Position erreicht, ein elektrisches Signal zu einer Endschaltererkennung 13 der Steuerelektronik 7. Von dort aus wird das Signal an eine Positionserkennungseinheit 14 weitergeleitet. Die Drehzahl des Elektromotors 10 wird von einer Drehzahlerkennung 15 der Steuerelektronik 7 erkannt und ebenfalls der Positionserkennungseinheit 14 zugeleitet. Über die Anzahl der Umdrehungen des Elektromotors 10 und dem hydraulischen Wirkungsgrad des Hydraulikgetriebes 11 kann in der Positionserkennungseinheit 14 der Steuerelektronik 7 der aktuelle Schwenkwinkel ϕ des Gestänges 4 ermittelt werden. Der berechnete aktuelle Schwenkwinkel ϕ wird von einem Kompensationsglied 16 der Steuerelektronik 7 mit Werten von einem Sensor 17 für Druck und Temperatur des Hydraulikmittels korrigiert. In einem Speicher 23 des Kompensationsglieds 16 werden zudem die durchschnittliche Anzahl von Umdrehungen des Elektromotors 10 für die Bewegung des Verdecks 1 zwischen den Positionen der beiden Endschalter 5, 6 abgespeichert. Damit läßt sich ein Verschleiß des Hydraulikgetriebes 11 oder des Gestänges 4 erfassen und abgleichen.

Die Signale der Positionserkennungseinheit 14 werden einer mit einem elektronischen Speicher 18 verbundenen Recheneinheit 19 zugeführt. In dem Speicher 18 sind Vorgaben für eine Drehzahl oder einen Drehzahlverlauf für den Elektromotor 10 in Abhängigkeit von der Position des Verdecks 1 abgespeichert. Mit diesen Werten wird über eine Drehzahlregelung 20 die Endstufe 8 des Elektromotors 10 angesteuert.

In der Zeichnung sind nur zwei Endschalter 5, 6 dargestellt. Selbstverständlich lassen sich auch mehrere Endschalter einsetzen. Anstelle der Berechnung der Position des Verdecks 1 läßt sich der Schwenkwinkel ϕ des Gestänges 4 auch von einem strichpunktiert dargestellten Sensor 21 erfassen und einer der Positionserkennungseinheit 14 vorgeschalteten Winkelerkennung 22 zuführen.

## Patentansprüche

1. Betätigungseinrichtung für ein Verdeck eines Cabriolets mit einem eine Hydraulikpumpe und an dem Verdeck angelenkte Hydraulikmotoren aufweisenden Hydraulikgetriebe, mit einem Positonsgeber zur Erzeugung von elektrischen Signalen in Abhängigkeit von den Positionen des Verdecks und mit einer Steuerelektronik zur Erzeugung des vorgesehenen Bewegungsablaufs des Verdecks und zur Erfassung der elektrischen Signale des Positionsgebers, **dadurch gekennzeichnet**, daß ein Volumenstrom an Hydraulikmittel der Hydraulikpumpe (9) oder eine hydraulische Leistung des Hydraulikmittels von der Steuerelektronik (7) zur Erzeugung einer vorgesehenen Bewegungsgeschwindigkeit des Verdecks (1) regelbar ist.

2. Betätigungseinrichtung nach Anspruch 1, **dadurch gekennzeichnet**, daß die Drehzahl eines die Hydraulikpumpe (9) antreibenden Elektromotors (10) regelbar ist.

3. Betätigungseinrichtung nach Anspruch 1 oder 2, **dadurch gekennzeichnet**, daß die Steuerelektronik (7) einen Speicher (18) für mehrere, bei verschiedenen Positionen des Verdecks (1) vorgesehene Drehzahlen oder Drehzahlverläufe des Elektromotors (10) hat.

4. Betätigungseinrichtung nach Anspruch 1, **dadurch gekennzeichnet**, daß die Leistung des die Hydraulikpumpe (9) antreibenden Elektromotors (10) regelbar ist.

5. Betätigungseinrichtung nach zumindest einem der vorhergehenden Ansprüche 1 bis 3**, dadurch gekennzeichnet**, daß mehrere Endlagenschalter die tatsächliche Position des Verdecks erfassen, wobei jedem Bereich zwischen zwei Endlagenschaltern eine konstante Drehzahl oder eine konstante Leistung des Elektromotors zugeordnet ist.

6. Betätigungseinrichtung nach zumindest einem der vorhergehenden Ansprüche 1 bis 3, **dadurch gekennzeichnet**, daß mehrere Endlagenschalter die tatsächliche Position des Verdecks erfassen, wobei zwischen diesen Positionen die Drehzahl des Motors über die Zeit integriert wird.

7. Betätigungseinrichtung nach zumindest einem der vorhergehenden Ansprüche, **dadurch gekennzeichnet**, daß die Steuerelektronik (7) Mittel zur Berechnung der aktuellen Position des Verdecks (1) hat.

8. Betätigungseinrichtung nach zumindest einem der vorhergehenden Ansprüche, **dadurch gekennzeichnet**, daß die Steuerelektronik (7) zur Ermittlung der aktuellen Position des Verdecks (1) aus der Anzahl der Umdrehungen des Elektromotors (10) und dem volumetrischen Wirkungsgrad des Hydraulikgetriebes (11) ausgebildet ist.

9. Betätigungseinrichtung nach zumindest einem der vorhergehenden Ansprüche, **dadurch gekennzeichnet**, daß der Elektromotor (10) die Winkelposition oder die Geschwindigkeit des Verdeckrotors erfaßt und daß die Steuerelektronik (7) zur Berechnung der Position des Verdecks (1) über die Rotorposition oder die -geschwindigkeit ausgebildet ist.

10. Betätigungseinrichtung nach zumindest einem der vorhergehenden Ansprüche, **gekennzeichnet durch** einen Sensor (21) zur Erfassung eines Stellwinkels oder Stellweges eines Gestänges (4) des Verdecks (1).

11. Betätigungseinrichtung nach zumindest einem der vorhergehenden Ansprüche, **gekennzeichnet durch** Sensoren (17) für Druck und Temperatur des Hydraulikmittels .

12. Betätigungseinrichtung nach zumindest einem der vorhergehenden Ansprüche, **dadurch gekennzeichnet**, daß die Steuerelektronik (7) einen Speicher (23) für eine durchschnittliche Anzahl von Umdrehungen des Elektromotors (10) für eine Bewegung des Verdecks (1) zwischen zwei Endschaltern (5, 6) hat.
